# EUROPEAN PATENT SPECIFICATION

(11) **EP 1 338 375 B1**
(45) Date of publication and mention of the grant of the patent: **25.01.2006**
(21) Application number: 03003867.3
(22) Date of filing: 20.02.2003
(51) Int. Cl.: B23Q 1/03

(54) **Low friction supporting table for plate punching machine**
Reibungsarmer Werkstücktisch für eine Maschine zum Stanzen von Platten
Table de support à faible coefficient de frottement pour poinçonneuse de tôle

(30) Priority: 20.02.2002 IT MO20020046
(43) Date of publication of application: 27.08.2003
(73) Proprietor: Euromac S.p.A., 41043 Formigine (Modena) (IT)
(72) Inventor: Lenzotti, Eugenio, 41049 Sassuolo, (MO) (IT)
(74) Representative: Crugnola, Pietro

(56) References cited:
- EP-A- 0 570 962
- EP-A- 0 835 707
- DE-A- 3 526 634
- DE-C- 647 252
- DE-U- 1 744 831
- US-A- 3 395 596
- US-A- 4 026 454

## Description

### Technical field

The present invention relates to a low-friction supporting table for plate punching machines, according to the preamble of claim 1, as for example known from US-A- 4 026 454.

### Background art

Punching machines are provided with wide horizontal supporting tables on which the plates are rested and made to slide during the punching steps. In the case where said plates have considerable planar dimensions, the punching steps are performed in successive stages, moving the section of plate to be worked on under the punching head in each case; said movements occur by making the plate slide on the abovementioned supporting table.

However, because of the notable weight of said plates and the friction they generate when pressing against the upper side of the abovementioned supporting tables, the movements require a considerable effort on the part of the punching machine operators.

In order to eliminate partially this drawback, the supporting tables are provided with a multiplicity of slightly flexible plastic bristles, the bases of which are engaged in a plurality of holes formed in the upper sides of the supporting tables and the free ends of which are directed upwards so as to form a kind of mat which supports the plates on the tips of each bristle: in this way, the tip contact reduces notably the degree of the abovementioned friction and the plates may be moved more easily.

However, it has been observed that in the case where the plates are particularly heavy or have a rough and uneven surface, the bristles tend to flex excessively until they bend back on themselves and the tip contact for which they were intended is reduced, with the result that the coefficient of friction between the plate and the underlying folded bristles increases again, making movements difficult. Low-friction supporting Tables are known from US-A-4 026 454, DE-U-1 744 831, and DE-A-647 252. In known documents above, a supporting plane is provided with rollers or balls which are supported by lifting devices, to lift up and down rollers or balls in respect of a respective support plane in which they are accomodated, to obtain an alternate low-friction contact with workpieces to be supported.

### Disclosure of the invention

The technical task of the present invention is to eliminate the abovementioned drawbacks of the known art by designing a low-friction supporting table for plate punching machines which allows the coefficient of friction between the supporting table and the plates to be reduced considerably, even in the case where said plates are very heavy or have rough and uneven surfaces which, during the movements, tend to drag and bend the tips of any bristles forming a supporting mat.

This task and these objects are achieved by means of a low-friction supporting table for plate punching machines according to claim 1, which comprises an upper side, a prismatic supporting base and at least one punching head for punching the plates extending upwards, characterized in that the upper side of said supporting table is provided with rolling means having active surfaces for contact with the plates to be punched which are directed upwards and define a geometric plane of lie, for the low-friction multidirectional movement of the plates to be punched along said geometric plane.

### Brief description of the drawings

Further characteristic features and advantages of the present invention will emerge more clearly from the detailed description of a preferred but not exclusive embodiment of a low-friction supporting table for plate punching machines, illustrated by way of a non-limiting example in the attached plates of drawings, in which:

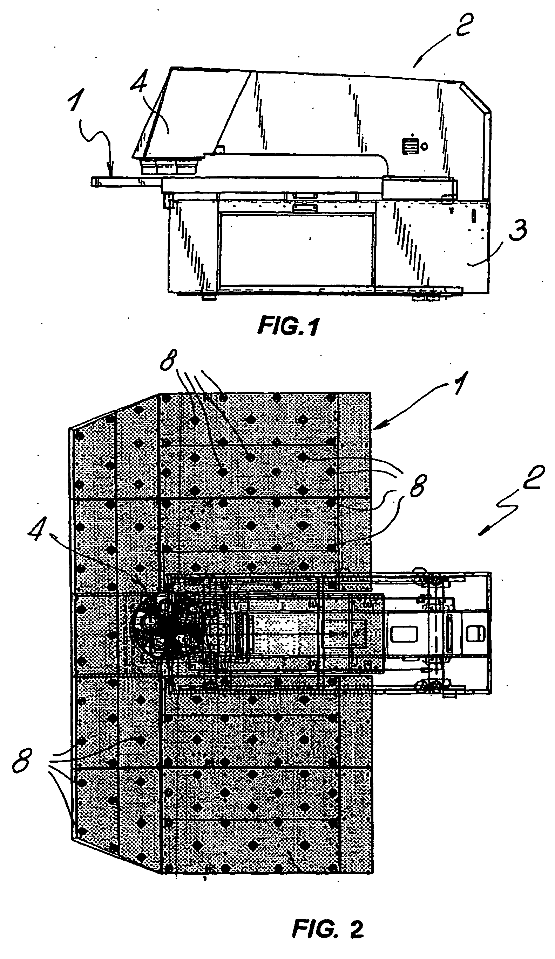

Fig. 1 shows a schematic side view of a plate punching machine;
Fig. 2 is the corresponding top plan view of the machine according to Fig. 1;

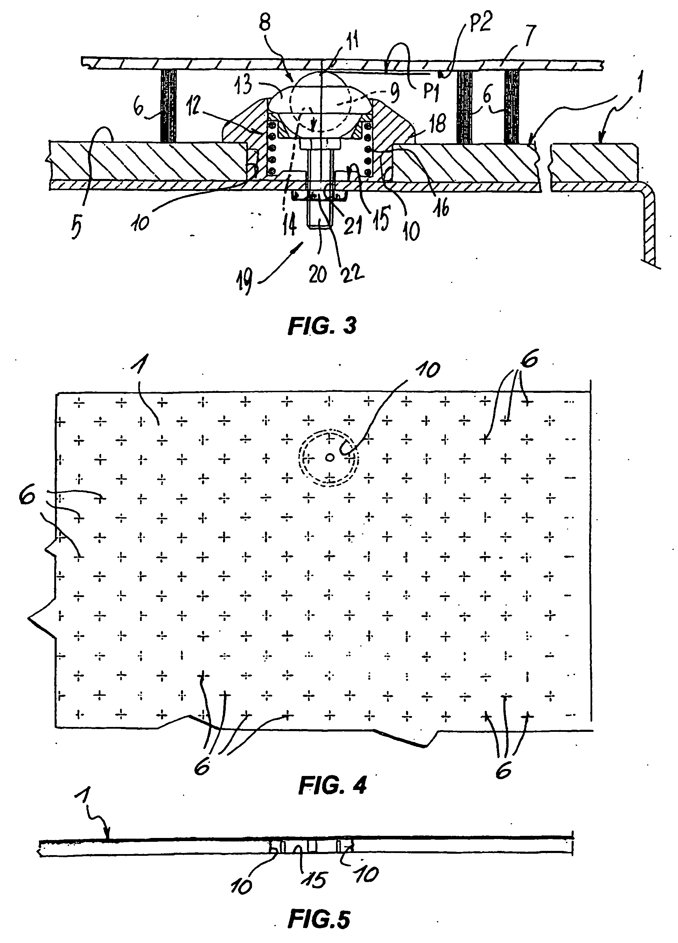

Fig. 3 is an enlarged schematic view of a detail of the low-friction plate supporting table of the punching machine according to Fig. 1;
Fig. 4 shows a plan view of a portion of the low-friction supporting table according to the present invention;
Fig. 5 is a schematic side view of the portion of the low-friction supporting table illustrated in Fig. 4.

### Detailed description of a preferred embodiment

With particular reference to the abovementioned figures, a low-friction supporting table for machines 2 for punching plates 7 is denoted in its entirety by 1, said machines comprising a prismatic base 3 which supports the abovementioned supporting table 1 and from which at least one punching head 4 extends upwards.

Normally, the upper side 5 of the supporting table 1 is provided with a plurality of bristles 6, which are preferably grouped in bunches and directed upwards so as to support said plates 7 on their tips and allow the plates to be slid along a plane with low friction.

According to the present invention, rolling means 8 are envisaged on the upper side 5, inset among the bristles 6, said rolling means having their respective active surfaces for contact with the plates 7, or more precisely the bottom sides of the latter, which face upwards.

The rolling means 8 are essentially formed by a plurality of balls 9 which are housed in a rotatable, free-floating manner in concave seats 10 which are originally formed in the abovementioned upper side 5 of the supporting table 1 or which may be formed in tables which are already in use.

The respective active surfaces 11 of the balls 9 are mutually coplanar and preferably lie in a common plane of lie P1 which is slightly lower than and substantially parallel to the plane of tip contact P2 between said bristles 6 and the bottom sides of the plates 7.

Elastic cushioning means 12 are envisaged between the balls 9 and the concave seats 10.

The balls 9 are housed in the respective concave seats 10 with respective retaining supports 13 being placed in between, said retaining supports forming receptacles 14 which are also concave and open at the top so as to allow said active contact surfaces 11 to protrude.

The supports 13 may be precision-fitted in an extractable manner in the concave seats 10, acting against the elastic cushioning means 12, which are retained between the supports 13 and the bottoms 15 of the concave seats 10 and are formed by at least one helical spring 16 which is reactive under compression and has its ends resting on the bottoms 15 and on the external bases 17 of the retaining supports 13 respectively.

Cup-shaped elements 18 may be arranged in between said retaining supports and the respective concave seats 10, said elements being intended to line them and being engageable therein by means of pressure.

The elastic cushioning means 12 are provided with means 19 for adjusting the reactive force, comprising, for each cushioning means, a respective threaded shank 20 which extends centrally downwards from the outside of said external bases 17 of the supports 13.

Corresponding holes 21, which are able to receive in a through manner the respective threaded shanks 20 and are centred on the bottoms 15 of each concave seat 10, are formed opposite the threaded shanks 20.

Corresponding nuts 22, the tightening or loosening of which causes the shortening or lengthening of the corresponding helical springs 16, may also be screwed onto the protruding sections of said threaded shanks on the opposite side with respect to the bottoms 15 and in contact with the bottom side of the supporting table 1.

The operating principle of the invention is described hereinafter, making reference, purely by way of example, to a supporting table 1 provided with bristles 6, and is as follows: the concave seats 10 are envisaged or formed in the supporting table 1 with a predefined planar distribution so as to allow plates 7 of any size to be supported.

The cup-shaped elements 18 are inserted by means of pressure inside the concave seats 10 and the supports 13 which support the balls 9 are engaged inside said cup-shaped elements so that the active surfaces 11 of the balls extend above the supports, the term "active surfaces 11" being understood as referring to a top semi-spherical portion.

Respective helical springs 16, which are reactive under compression, are arranged in between said supports 13 and the bottoms of the cup-shaped elements 18.

When inserting the supports 13, the threaded shanks 20 are inserted inside the corresponding holes 21 and the nuts 22 are screwed onto the shanks, it being possible to stabilise the insertion of the supports 13 inside the concave seats 10 and at the same time pretension the springs 16 in terms of elastic reaction by tightening or loosening the nuts against the bottom side of the supporting table 1.

The height of the cup-shaped elements 18 is such that the top poles of the active surfaces 11 of the balls 9 are mutually coplanar and positioned on a common plane of lie P1, which is advantageously located slightly below the common plane of lie P2 of the tips of the bristles 6.

In the case where a plate 7 weighs so much that it bends the bunches of bristles 6 which support it on the supporting table 1 during processing on the punching machine 2, the abovementioned plate 7 automatically rests on the balls 9 which lie immediately underneath and, in this way, take over from and restrict the bending of the bristles 6 reulting from the load, maintaining an easy sliding movement of the plate 7 on the low-friction supporting table 1, behaving to all effects like bristles - albeit with less flexibility - and, like the bristles, maintaining a cushioning effect which can be precalibrated, as a result of the elasticity of the springs 16.

It has been observed in practice that the invention described achieves the proposed objects.

The invention thus conceived may be subject to numerous modifications and variations, all of which fall within the protective scope as defined by the content of the claims.

Moreover, all the details may be replaced by other technical equivalent details.

In practice, the materials used, as well as the forms and dimensions, may be of any type according to the requirements, without thereby departing from the protective scope of the present invention, as defined by the claims.

## Claims

1. A low-friction supporting table for plate (7) punching machines (2), comprising an upper side (5), a supporting prismatic base (3) and at least one punching head (4) for punching the plates (7) extending upwards, said upper side (5) of the supporting table with rolling means (8) having, active surfaces (11) which face upwards and define a first geometric plane of lie (P1) for the low-friction multidirectional movement of the plates (7) along said first geometric plane of lie (P1), **characterized in that** said upper side (5) of the supporting table being provided with flexible bristle means (6) upwardly directed from said upper side (5) defining a second geometric plane of lie (P2) and said first plane of lie (P1) is slightly lower than said second geometric plane of lie (P2) as to maintain a low-friction contact with plates (7) when said bristle means (6) bends.

2. Table according to claim 1, **characterized in that** said rolling means (8) are formed by a plurality of free-floating balls (9) mounted rotatably in concave seats (10) formed in said upper side (5).

3. Table according to claim 2, **characterized in that** elastic cushioning means (12) are envisaged between said balls (9) and said concave seats (10).

4. Table according to claim 2, **characterized in that** it comprises intermediate retaining supports (13) defining receptacles (14) which are concave and open at the top so as to house said balls (9) in said concave seats (10).

5. Table according to claim 4, **characterized in that** said supports (13) may be inserted inside said concave seats (10) by means of precision-fitting against the action of said elastic cushioning means (12).

6. Table according to claims 3 and 4, **characterized in that** said elastic cushioning means (12) are retained between said supports (13) and corresponding bottom walls (15) of said concave seats (10).

7. Table according to claims 1, 5 and 6, **characterized in that** said elastic cushioning means (12) comprise at least one helical compression spring (16) having its ends in contact with said bottom walls (15) of said concave seats (10) and said retaining supports (13) respectively.

8. Table according to claim 4, **characterized in that** it comprises cup-shaped lining elements (18) which may be pressure inserted into the respective concave seats (10) between said supports (13) and said concave seats (10).

9. Table according to claim 7, **characterized in that** said elastic cushioning means (12) are provided with means (19) for adjusting the pretensioning thereof.

10. Table according to claim 9, **characterized in that** said adjusting means (19) comprise, for each spring, a threaded shank (20), which is integral with a corresponding support (13) and passes through a hole (21) formed in one of said bottom walls (15).

11. Table according to claim 10, **characterized in that** said adjusting means (19) also comprise a nut (22) which may be screwed onto the free end of each threaded shank (20) so as to pretension selectively said springs (16) by means of the contact with the bottom side of said supporting table (1).

12. Table according to claim 10, **characterized in that** said holes (21) and said threaded shanks (20) are substantially registered with respect to the respective concave seats (10).

13. Table according to one or more of the preceding claims, **characterized in that** said upper side (5) is provided with a plurality of upwardly directed bristles (6) so as to contribute to the action of supporting the plates (7) performed by said rolling means (8).

14. Table according to claim 13, **characterized in that** said common plane of lie (P1) of said active surfaces (11) is substantially parallel to the plane of tip contact (P2) between said bristles (6) and the bottom sides of the plates (7).

## Patentansprüche

1. Ein Aufnahmetisch mit niedriger Reibung für Plattenstanzmaschinen (2), mit einer Oberseite (5), einer aufnehmenden, prismenförmigen Basis (3) und mit wenigstens einem Stanzkopf (4) zum Stanzen der Platten (7), der sich nach oben erstreckt, wobei die Oberseite (5) des Aufnahmetisches Rollmittel (8) mit aktiven Oberflächen (11) aufweist, die nach oben gerichtet sind und eine erste geometrische Lageebene (P1) für die reibungsarme multidirektionale Bewegung der Platten (7) entlang der ersten geometrischen Lageebene (P1) definieren, **dadurch gekennzeichnet, dass** die Oberseite (5) des Aufnahmetisches mit flexiblen Borstenmittel (6) versehen ist, die von der Oberseite (5) nach oben gerichtet sind und eine zweite geometrische Lageebene (P2) definieren, und dass die erste Lageebene (P1) etwas niedriger als die zweite geometrische Lageebene (P2) ist, um einen reibungsarmen Kontakt mit Platten (7) zu behalten, wenn sich die Borstenmittel (6) biegen.

2. Tisch nach Anspruch 1, **dadurch gekennzeichnet, dass** die Rollmittel (8) durch eine Mehrzahl von freilaufenden Kugeln (9) gebildet sind, die drehbar in konkaven Sitzen (10) gelagert sind, die auf der Oberseite (5) gebildet sind.

3. Tisch nach Anspruch 2, **dadurch gekennzeichnet, dass** elastische Kissenmittel (12) zwischen den Kugeln (9) und den konkaven Sitzen (10) vorgesehen sind.

4. Tisch nach Anspruch 2, **dadurch gekennzeichnet, dass** er rückhaltende Zwischenaufnahmen (13) umfasst, die Aufnahmen (14) definieren, die konkav und oben offen sind, so dass sie die Kugeln in den konkaven Sitzen (10) aufnehmen.

5. Tisch nach Anspruch 4, **dadurch gekennzeichnet, dass** die Aufnahmen (13) in die konkaven Sitze (10) mit Hilfe von Präzisionspassungen gegen die Wirkung der elastischen Kissenmittel (12) eingebracht werden können.

6. Tisch nach Anspruch 3 und 4, **dadurch gekennzeichnet, dass** die elastischen Kissenmittel (12) zwischen den Aufnahmen (13) und entsprechenden Bodenwänden (15) der konkaven Sitze (10) gehalten sind.

7. Tisch nach Anspruch 1, 5 und 6, **dadurch gekennzeichnet, dass** die elastischen Kissenmittel (12) wenigstens eine Druck-Schraubenfeder (16) aufweisen, die an ihren Enden in Kontakt mit den Bodenwänden (15) der konkaven Sitze (10) bzw. der rückhaltenden Aufnahmen (13) ist.

8. Tisch nach Anspruch 4, **dadurch gekennzeichnet, dass** er tassenförmige Auskleidungselemente (18) aufweist, die unter Druck in die betreffenden konkaven Sitze (10) zwischen die Aufnahmen (13) und die konkaven Sitze (10) eingeführt werden können.

9. Tisch nach Anspruch 7, **dadurch gekennzeichnet, dass** die elastischen Kissenmittel (12) mit Mitteln (19) zur Einstellung der Vorspannung derselben versehen sind.

10. Tisch nach Anspruch 9, **dadurch gekennzeichnet, dass** die Einstellmittel (19) für jede Feder einen Gewindeschaft (20) aufweisen, der einstückig mit einer entsprechenden Aufnahme (13) ausgebildet ist und durch ein Loch (21) geführt ist, das in einer der Bodenwände (15) gebildet ist.

11. Tisch nach Anspruch 10, **dadurch gekennzeichnet, dass** die Einstellmittel (19) auch eine Nuss (22) aufweisen, die auf das freie Ende jedes Gewindeschaftes (20) geschraubt werden kann, um so die Federn (16) selektiv mit Hilfe des Kontaktes mit der Bodenseite des Aufnahmetisches (1) vorzuspannen.

12. Tisch nach Anspruch 10, **dadurch gekennzeichnet, dass** die Löcher (21) und die Gewindeschäfte (20) im Wesentlichen in Bezug auf die betreffenden konkaven Aufnahmen (10) ausgerichtet sind.

13. Tisch nach einem oder mehreren der vorhergehenden Ansprüche, **dadurch gekennzeichnet, dass** die Oberseite (5) mit einer Mehrzahl von nach oben gerichteten Borsten (6) versehen ist, um so zu der Wirkung des Stützens der Platten (7), die von den Rollmitteln (8) ausgeübt wird, beizutragen.

14. Tisch nach Anspruch 13, **dadurch gekennzeichnet, dass** die gemeinsame Lageebene (P1) der aktiven Oberflächen (11) im Wesentlichen parallel zu der Ebene des Spitzenkontaktes (P2) zwischen den Borsten (6) und den Unterseiten der Platten (7) ist.

## Revendications

1. Plateau de support à frottement réduit pour des machines (2) de poinçonnage de plaques (7), comprenant une face supérieure (5), une base de support prismatique (3) et au moins une tête poinçonneuse (4) pour poinçonner les plaques (7) s'étendant vers le haut, ladite face supérieure (5) du plateau de support ayant des moyens de roulement (8) ayant des surfaces actives (11) qui regardent vers le haut et définissent un premier plan géométrique d'assiette (P1) pour le déplacement multidirectionnel à frottement réduit des plaques (7) le long dudit premier plan géométrique (P1), ***caractérisé en ce que*** ladite face supérieure (5) du plateau de support est munie de moyens de poils de brosse flexibles (6) dirigés vers le haut depuis ladite face supérieure (5) en définissant un deuxième plan géométrique d'assiette (P2) et ledit premier plan d'assiette (P1) est sensiblement inférieur audit deuxième plan géométrique d'assiette (P2) afin de maintenir un contact à frottement réduit avec les plaques (7) lorsque lesdits moyens de poils de brosse (6) se courbent.

2. Plateau selon la revendication 1, ***caractérisé en ce que*** lesdits moyens de roulement (8) sont formés d'une pluralité de billes (9) flottant librement, montées rotatives dans des sièges concaves (10) formés dans ladite face supérieure (5).

3. Plateau selon la revendication 2, ***caractérisé en ce que*** des moyens amortisseurs élastiques (12) sont prévus entre lesdites billes (9) et lesdits sièges concaves (10).

4. Plateau selon la revendication 2, ***caractérisé en ce qu'***il comprend des supports de maintien intermédiaires (13) définissant des réceptacles (14) qui sont concaves et ouverts sur le dessus afin d'accueillir lesdites billes (9) dans lesdits sièges concaves (10).

5. Plateau selon la revendication 4, ***caractérisé en ce que*** lesdits supports (13) peuvent être insérés à l'intérieur desdits sièges concaves (10) par emboîtage précis en opposition à l'action desdits moyens amortisseurs élastiques (12).

6. Plateau selon les revendications 3 et 4, ***caractérisé en ce que*** lesdits moyens amortisseurs élastiques (12) sont retenus entre lesdits supports (13) et des parois inférieures correspondantes (15) desdits sièges concaves (10).

7. Plateau selon les revendications 1, 5 et 6, ***caractérisé en ce que*** lesdits moyens amortisseurs élastiques (12) comprennent au moins un ressort de compression hélicoïdal (16) ayant ses extrémités en contact avec lesdites parois inférieures (15) desdits sièges concaves (10) et lesdits supports de maintien (13), respectivement.

8. Plateau selon la revendication 4, ***caractérisé en ce qu'***il comprend des éléments de revêtement (18) en forme de coupelle qui peuvent être insérés par pression dans les sièges concaves respectifs (10) entre lesdits supports (13) et lesdits sièges concaves (10).

9. Plateau selon la revendication 7, ***caractérisé en ce que*** lesdits moyens amortisseurs élastiques (12) sont pourvus de moyens (19) pour en régler la précontrainte.

10. Plateau selon la revendication 9, ***caractérisé en ce que*** lesdits moyens de réglage (19) comprennent, pour chaque ressort, une tige filetée (20) qui est solidaire d'un support correspondant (13) et passe dans un trou (21) formé dans l'une desdites parois inférieures (15).

11. Plateau selon la revendication 10, ***caractérisé en ce que*** lesdits moyens de réglage (19) comprennent aussi un écrou (22) qui peut être vissé sur l'extrémité libre de chaque tige filetée (20) afin de précontraindre sélectivement lesdits ressorts (16) au moyen du contact avec la face inférieure dudit plateau de support (1).

12. Plateau selon la revendication 10, ***caractérisé en ce que*** lesdits trous (21) et lesdites tiges filetées (20) sont sensiblement en concordance avec les sièges concaves respectifs (10).

13. Plateau selon l'une ou plusieurs des revendications précédentes, ***caractérisé en ce que*** ladite face supérieure (5) est munie d'une pluralité de poils de brosse (6) orientés vers le haut afin de contribuer à l'action de support des plaques (7) assurée par lesdits moyens de roulement (8).

14. Plateau selon la revendication 13, ***caractérisé en ce que*** ledit plan commun d'assiette (P1) desdites surfaces actives (11) est sensiblement parallèle au plan (P2) de contact par points entre lesdits poils de brosse (6) et les faces inférieures des plaques (7).
